# EUROPÄISCHE PATENTSCHRIFT

(11) **EP 3 889 543 B1**
(45) Veröffentlichungstag und Bekanntmachung des Hinweises auf die Patenterteilung: **07.06.2023**
(21) Anmeldenummer: 20167627.7
(22) Anmeldetag: 01.04.2020
(51) Int. Cl.: G01B 21/04

(54) **SIX-DOF-MESSHILFSMITTELMODUL ZUR BESTIMMUNG VON 3D-KOORDINATEN VON ZU VERMESSENDEN PUNKTEN EINER OBJEKTOBERFLÄCHE**
SIX-DOF MEASUREMENT ACCESSORY MODULE FOR DETERMINING 3D COORDINATES OF POINTS OF AN OBJECT SURFACE TO BE MEASURED
MODULE DE MOYEN AUXILIAIRE DE MESURE SIX-DOF DESTINÉ À LA DÉTERMINATION DES COORDONNÉES 3D DES POINTS À MESURER D'UNE SURFACE D'OBJET

(43) Veröffentlichungstag der Anmeldung: 06.10.2021
(73) Patentinhaber: Leica Geosystems AG, 9435 Heerbrugg (CH)
(72) Erfinder: FUCHS, Herr Simon, CH-5040 Schöftland (CH); MOSER, Herr Daniel, CH-5707 Seengen (CH)
(74) Vertreter: Kaminski Harmann

(56) Entgegenhaltungen:
- US-A1- 2017 108 528
- US-A1- 2017 343 336
- US-A1- 2018 149 469
- US-A1- 2018 321 383

## Beschreibung

### -FACHGEBIET DER ERFINDUNG-

Die Erfindung betrifft ein Six-DOF-Messhilfsmittelmodul, welches in Verbindung mit einem Lasertracker verwendet werden kann um 3D-Koordinaten von zu vermessenden Punkten einer Objektoberfläche zu bestimmen.

### -HINTERGRUND-

In der Objektvermessungstechnik sind unterschiedliche Systeme bekannt, zur Bestimmung von 3D-Koordinaten von zu vermessenden Punkten einer Objektoberfläche, sogenannten Oberflächenpunkten. Jedes System basiert auf der Verwendung eines spezifischen Messkopfes/Sensors, welcher die Objektoberfläche abtastet. Dabei gibt weitestgehend die Vermessungsaufgabe und insbesondere darin definierte Anforderungen an die Messgenauigkeit/-geschwindigkeit die Wahl des Messkopfes/Sensors vor. Es gibt hauptsächlich zwei Klassen von Messkopf/Sensor-Typen, welche bei der Vermessung von Objekten zum Einsatz kommen: Die taktil und die berührungslos abtastenden Messköpfe. Taktile Messköpfe weisen beispielsweise einen stiftförmigen Messtaster mit einer an einem Ende befestigten Rubinkugel auf. Die Rubinkugel wird mit einem zu vermessenden Punkt einer Objektoberfläche in Berührung gebracht und basierend darauf werden die 3D-Koordinaten dieses Punktes ermittelt. Berührungslos abtastende Messköpfe wie beispielsweise Laserscanner weisen eine Strahlquelle zur Aussendung von Messstrahlung auf, wobei ein zu vermessender Punkt einer Objektoberfläche von der Messstrahlung angestrahlt und Messstrahlung von diesem angestrahlten Punkt reflektiert wird und basierend darauf die 3D-Koordinaten dieses Punktes ermittelt werden. Die meisten dieser taktil oder berührungslos abtastenden Objektvermessungssensoren oder Messköpfe wurden für eine Verwendung beispielsweise mit einer Koordinatenmessmaschine (CMM), einer automatisch geführten kinematischen Kette oder einem Roboterarm konzipiert. Das bedeutet, dass die Messköpfe dazu konzipiert wurden an eine CMM, eine automatisch geführte kinematische Kette oder einen Roboterarm gekoppelt zu werden, wodurch der Messkopf automatisch geführt und kontrolliert eine zu vermessende Objektoberfläche abtastet und vermisst. Systeme entsprechend dem Stand der Technik sind beispielsweise bekannt aus US 2017/343336 A1, US 2018/321383 A1, US 2018/149469 A1 und US 2017/108528 A1.

### -BESCHREIBUNG DER ERFINDUNG-

Was fehlt ist ein Messhilfsmittelmodul, welches die Flexibilität in der Nutzung von taktilen und berührungslos abtastenden Messköpfen steigert und gleichzeitig die Effizienz und Genauigkeit der Vermessung von Objektoberflächen erhöht.

Es ist deshalb eine Aufgabe der vorliegenden Erfindung ein solches Messhilfsmittelmodul bereitzustellen, welches einen flexiblen Einsatz sowohl taktil als auch berührungslos abtastender Messköpfe ermöglicht und gleichzeitigt die Genauigkeit der bestimmten 3D-Koordinaten erhöht bzw. die Effizienz bei der Vermessung einer Objektoberfläche steigert.

Das erfindungsgemässe Messhilfsmittelmodul ist ein Messhilfsmittelmodul gemäß Anspruch 1, welches die Pose, also die Position und Orientierung eines Messkopfes/Sensors/Sensoraufsatzes in bis zu sechs Freiheitsgraden (Six-DOF) bestimmbar macht. Das Six-DOF-Messhilfsmittelmodul ist in einem einen Lasertracker zur Positions- und Orientierungsbestimmung des Six-DOF-Messhilfsmittelmoduls aufweisenden System zur Bestimmung von 3D-Koordinaten von zu vermessenden Punkten einer Objektoberfläche verwendbar. Die Erfindung betrifft ein
Austauschseite für Beschreibung - Reinfassung solches Six-DOF-Messhilfsmittelmodul mit einem Körper mit einer Objektkopplungsvorrichtung mit einer Objektschnittstelle, welche Objektkopplungsvorrichtung dazu ausgestaltet ist über die Objektschnittstelle alternativ sowohl einen Haltegriff posenfest an den Körper als auch den Körper posenfest an eine mobile Plattform zu koppeln, einer Sensoraufsatzkopplungsvorrichtung mit einer Sensorschnittstelle, welche Sensoraufsatzkopplungsvorrichtung dazu ausgestaltet ist alternativ sowohl einen berührungslos messenden Sensoraufsatz, als auch einen taktil messenden Sensoraufsatz über die Sensorschnittstelle posenfest an den Körper zu koppeln, und visuellen Markierungen, die in definierter räumlicher Beziehung ein Muster bildend an dem Körper in einem Markierungsbereich angeordnet sind und für den Lasertracker die Orientierung des Six-DOF-Messhilfsmittelmoduls bestimmbar machen.

Dabei hat eine Kopplungsvorrichtung, d.h. sowohl die Objektkopplungsvorrichtung also auch die Sensorkopplungsvorrichtung jeweils spezifische strukturelle Kopplungsmerkmale, wobei Sensoraufsätze bzw. Objekte, welche an die entsprechende Kopplungsvorrichtung koppelbar sind zu diesen spezifischen Kopplungsmerkmalen korrespondierende strukturelle Kopplungsmerkmale aufweisen. Diese zueinander korrespondierenden strukturellen Merkmale ermöglichen, ein An- bzw. Abkoppeln von dafür vorgesehenen Sensoraufsätzen bzw. Objekten an den Körper in einer bestimmten Weise, sodass in angekoppeltem Zustand der Sensoraufsatz bzw. das Objekt, d.h. der Haltegriff oder die mobile Plattform, eine definierte Posenrelation zum Körper aufweist. Die Posenrelation bezieht sich dabei auf eine bestimmte Position und Orientierung relativ zum Körper.

Die Kopplungsvorrichtungen, d.h. sowohl die Objektkopplungsvorrichtung als auch die Sensorkopplungsvorrichtung, weisen dabei eine für die Kopplungsvorrichtung spezifische Schnittstelle - eine Objektschnittstelle bzw. eine Sensorschnittstelle - auf. Diese Schnittstellen korrespondieren mit einem jeweiligen Schnittstellengegenstück seitens des jeweiligen koppelbaren Objekts bzw. Sensoraufsatzes. Über die jeweilige Schnittstelle werden der Körper und das angekoppelte Objekt bzw. der angekoppelte Sensoraufsatz funktional miteinander verbunden. D.h. über die Verbindung bzw. über die Schnittstellen können typischerweise sowohl Daten/Informationen/Signale gesendet als auch elektrischer Strom geleitet werden. Dabei kann die jeweilige Schnittstelle sowohl eine kommunikative Verbindung - betreffend bspw. Daten/Information/Signale - als auch eine elektrische Verbindung zwischen einem angekoppelten Objekt und dem Six-DOF-Messhilfsmittelmodul bzw. einem angekoppelten Sensoraufsatz und dem Six-DOF-Messhilfsmittelmodul bereitstellen. Dabei können Daten/Information/Signale sowohl vom angekoppelten Objekt bzw. Sensoraufsatz zum Six-DOF-Messhilfsmittelmodul als auch umgekehrt gesendet werden.

Die Ankopplung eines Haltegriffs macht das Six-DOF-Messhilfsmittelmodul in einem manuell geführten Modus nutzbar. Mittels der Kopplung des Körpers an eine automatisch geführte mobile Plattform ist das Six-DOF-Messhilfsmittelmodul beispielsweise in einem automatisch geführten Modus nutzbar.

Ein berührungslos messender Sensoraufsatz kann bspw. ein laserscannerbasierter Sensoraufsatz, ein weisslichtscannerbasierter Sensoraufsatz oder auch ein berührungslos nicht scannender Sensoraufsatz zur Distanzmessung sein.

Bei den taktil messenden Sensoraufsätzen basiert die Bestimmung der Distanz zu einem Oberflächenpunkt auf dessen Berührung beispielsweise mit einem Ende eines Taststiftes. Bei Berührung ist die Distanz zum Oberflächenpunkt über die Geometrie des Taststifts und dessen Ende bestimmbar.

Sowohl die berührungslos messenden als auch die taktil messenden Sensoraufsätze ermitteln dabei Koordinateninformation als Messinformation, basierend darauf 3D-Koordinaten von zu vermessenden Oberflächenpunkten von einem Lasertracker bestimmbar sind.

Des Weiteren weist das Six-DOF-Messhilfsmittelmodul visuelle Markierungen in einem Markierungsbereich auf. Die visuellen Markierungen sind in definierter räumlicher Beziehung zueinander angeordnet und formen dadurch ein spezifisches Muster, welches dazu dient, die Orientierung des Körpers und somit des Six-DOF-Messhilfsmittelmoduls für einen Lasertracker bestimmbar zu machen. Die visuellen Markierungen können bspw. Lichtpunkte sein.

Das erfindungsgemässe Six-DOF-Messhilfsmittelmodul ermöglicht einen flexiblen Einsatz, handgeführt und automatisch geführt, sowohl taktil als auch berührungslos abtastender Messköpfe und gleichzeitigt eine hochpräzise Bestimmung von 3D-Koordinaten von Oberflächenpunkten.

Gemäss einer Ausführungsform kann die Sensoraufsatzkopplungsvorrichtung aufweisen: Einen ersten Kopplungsteil mit einer ersten Kopplungsteilschnittstelle, welcher erste Kopplungsteil dazu ausgestaltet ist, mindestens einen berührungslos messenden Sensoraufsatz über die erste Kopplungsteilschnittstelle posenfest an den Körper zu koppeln, und einen zweiten Kopplungsteil mit einer zweiten Kopplungsteilschnittstelle, welcher zweite Kopplungsteil dazu ausgestaltet ist, mindestens einen taktil messenden Sensoraufsatz über die zweite Kopplungsteilschnittstelle posenfest an den Körper zu koppeln.

Gemäss einer Ausführungsform können die Schnittstellen eine kommunikative Verbindung zwischen gekoppeltem Sensoraufsatz und Six-DOF-Messhilfsmittelmodul bzw. zwischen Haltegriff oder mobiler Plattform und dem Six-DOF-Messhilfsmittelmodul bereitstellen. Dann kann das Six-DOF-Messhilfsmittelmodul dazu konfiguriert sein, zur Bestimmung von 3D-Koordinaten von zu vermessenden Punkten einer Objektoberfläche dem Lasertracker, Kopplungsinformation betreffend einen angekoppelten und einen abgekoppelten Zustand als Kopplungszustand, und die Identifikation eines gekoppelten Sensoraufsatzes, eines gekoppelten Haltegriffs oder einer gekoppelten mobilen Plattform, und Messinformation bereitzustellen, und das von den visuellen Markierungen gebildete Muster anzuzeigen.

Mit Schnittstellen ist gemeint die Geräteschnittstelle, die Objektschnittstelle und gegebenenfalls die Kopplungsteilschnittstellen. Die kommunikative Verbindung wird zwischen gekoppeltem Sensoraufsatz und dem Six-DOF-Messhilfsmittelmodul, bzw. zwischen dem gekoppelten Objekt, d.h. einem Haltegriff oder einer mobilen Plattform, und dem Six-DOF-Messhilfsmittelmodul bereitgestellt. Mit Kopplungsvorrichtungen ist gemeint die Objektkopplungsvorrichtung und die Sensoraufsatzkopplungsvorrichtung.

Dabei ermöglicht die kommunikative Verbindung einen Daten-/Informations-/Signal-Austausch zwischen einem gekoppelten Objekt bzw. Sensoraufsatz und dem Six-DOF-Messhilfsmittelmodul in beide Richtungen. Kopplungsinformation umfasst dabei Information, welche für einen Lasertracker den Kopplungsstatus einer Kopplungsvorrichtung, d.h. ist ein Objekt bzw. ein Sensoraufsatz angekoppelt oder nicht, erkennbar macht. Ebenso umfasst die Kopplungsinformation Information die für einen Lasertracker ein gekoppeltes Objekt bzw. einen gekoppelten Sensoraufsatz identifizierbar macht. Messinformation umfasst dabei Koordinateninformation, die von den Sensoraufsätzen ermittelt wird und basierend darauf für den Lasertracker 3D-Koordinaten bestimmbar sind. Beispielsweise kann Koordinateninformation auf von einem berührungslos messenden Sensoraufsatz bestimmten Distanzen zu einem zu vermessenden Oberflächenpunkt basieren. Ebenso kann die Messinformation Signale bspw. Triggersignale umfassen, welche von den Sensoraufsätzen empfangbar sein können. Solche Triggersignale können bspw. von einem Auslösemechanismus eines angekoppelten Haltegriffs generiert werden oder auch von einem Lasertracker. Es kann auch die jeweilige Kopplungsvorrichtung dazu konfiguriert sein über das Six-DOF-Messhilfsmittelmodul oder direkt Kopplungsinformation bzw. Messinformation dem Lasertracker bereitzustellen.

Gemäss einer Ausführungsform kann das Six-DOF-Messhilfsmittelmodul mindestens einen Sensoraufsatz aufweisen aus einer Gruppe von Sensoraufsätzen mit berührungslos messenden Sensoraufsätzen, insbesondere einem Laserscanner-Sensoraufsatz und taktil messenden Sensoraufsätzen.

Gemäss einer Ausführungsform des Six-DOF-Messhilfsmittelmoduls kann der Haltegriff einen betätigbaren Auslösemechanismus aufweisen, welcher bei Betätigung ein Auslösesignal als Messinformation erzeugt.

Der Auslösemechanismus kann bspw. in Form eines betätigbaren Knopfes oder einer betätigbaren Taste ausgebildet sein. Das so erzeugte Auslösesignal kann dann über die Objektschnittstelle und Sensorschnittstelle einem Sensoraufsatz bereitgestellt werden, basierend darauf der Sensoraufsatz Koordinateninformation ermittelt.

Gemäss einer weiteren Ausführungsform kann das Six-DOF-Messhilfsmittelmodul dazu konfiguriert sein - im Falle eines angekoppelten taktilen Sensoraufsatzes - basierend auf einem durch Betätigung des Auslösemechanismus erzeugten Auslösesignal dem Lasertracker Koordinateninformation als Messinformation zur Bestimmung von 3D-Koordinaten von zu vermessenden Punkten einer Objektoberfläche bereitzustellen, und - im Falle eines angekoppelten berührungslos messenden Sensoraufsatzes, insbesondere eines Laserscanner-Sensoraufsatzes - dem Lasertracker Koordinateninformation als Messinformation zur Bestimmung von 3D-Koordinaten von zu vermessenden Punkten einer Objektoberfläche fortlaufend bereitzustellen, wobei fortlaufend bereitgestellte Koordinateninformation basierend auf einer Betätigung des Auslösemechanismus markiert wird.

Gemäss einer weiteren Ausführungsform des Six-DOF-Messhilfsmittelmoduls können die visuellen Markierungen Lichtpunkte sein.

Diese Lichtpunkte können beispielsweise von einer Lichtquelle an den jeweiligen Punkten oder mittels Reflektion von dafür vorgesehenem Licht an den jeweiligen Punkten erzeugt werden. Ebenso kann das Licht einer einzelnen Lichtquelle über Lichtleiter zu den jeweiligen Punkten geleitet werden. Diese Lichtpunkte erzeugen ein orientierungsspezifisches Muster, welches die Orientierung des Six-DOF-Messhilfsmittelmoduls für einen Lasertracker bestimmbar machen.

Gemäss einer Ausführungsform des Six-DOF-Messhilfsmittelmoduls kann der Körper einen Reflektor aufweisen der den visuellen Markierungen zugeordnet ist und die Position des Six-DOF-Messhilfsmittelmoduls für einen Lasertracker bestimmbar macht.

Der Reflektor, bspw. ein Retroreflektor, ist typischerweise dazu ausgelegt auf ihn einfallende Strahlung in Richtung Strahlquelle zu reflektieren. Die von dem Reflektor reflektierte Strahlung macht die Position des Six-DOF-Messhilfsmittelmoduls für einen Lasertracker bestimmbar. Beispielsweise kann der Reflektor mit Laserstrahlung eines Lasertrackers angestrahlt werden, welche dann von dem Reflektor in Richtung Lasertracker reflektiert wird. Basierend auf der Detektion der reflektierten Laserstrahlung kann der Lasertracker die genauen Winkel unter welchen der Reflektor angestrahlt wird bestimmen. Basierend auf vom Reflektor reflektierter Laserstrahlung kann ebenfalls die Distanz zum Reflektor für einen Lasertracker bestimmbar sein. Basierend auf der Winkelinformation betreffend die Richtung der ausgestrahlten Laserstrahlung und der bestimmten Distanz zum Reflektor ist die Position des Reflektors und somit des Six-DOF-Messhilfsmittelmoduls für den Lasertracker bestimmbar.

Die Kopplungsvorrichtungen können abnehmbar mit dem Körper verbunden sein, wobei sowohl in abgekoppeltem Kopplungszustand der Sensoraufsatzkopplungsvorrichtung als auch bei abgenommener Sensoraufsatzkopplungsvorrichtung die visuellen Markierungen und der Reflektor eine Pose in bis zu sechs Freiheitsgraden eines an die Objektkopplungsvorrichtung gekoppelten Objekts für einen Lasertracker bestimmbar machen.

Gemäss einer weiteren Ausführungsform kann die Sensoraufsatzkopplungsvorrichtung ferner dazu ausgelegt sein einen Sensoraufsatz über ein Adapterstück das posenfest mit dem Sensoraufsatz verbindbar ist in einer durch das Adapterstück relativ zu der Sensoraufsatzkopplungsvorrichtung definierten Orientierung und Position an den Körper zu koppeln, und die Kopplungsinformation ferner Information zur definierten Orientierung und Position des Sensoraufsatzes relativ zu der Sensoraufsatzkopplungsvorrichtung betreffen.

Gemäss einer Ausführungsform kann das Six-DOF-Messhilfsmittelmodul dazu konfiguriert sein, in an eine automatisch geführte mobile Plattform mit Kollisionsverhinderungssystem gekoppeltem Zustand, Kopplungsinformation über die Objektschnittstelle dem Kollisionsverhinderungssystem zur Verhinderung von Kollisionen innerhalb eines Bewegungsraums der automatisch geführten mobilen Plattform mit gekoppeltem Six-DOF-Messhilfsmittelmodul bereitzustellen.

Dabei wird das Six-DOF-Messhilfsmittelmodul in einem automatisch geführten Modus verwendet. Dabei kann die automatisch geführte mobile Plattform ein dazugehöriges Kollisionsverhinderungssystem aufweisen. Dieses Kollisionsverhinderungssystem dient dazu den definierten Bewegungsraum innerhalb welchem die mobile Plattform automatisch bewegbar ist zu überwachen. Die Überwachung kann bspw. mittels Näherungssensoren, welche mit ihren Sensorsichtfeldern zumindest den definierten Bewegungsraum des Roboterarms abdecken, bereitgestellt werden. Solche Näherungssensoren dienen dazu das Vorhandensein von Objekten und/oder Menschen innerhalb des bestimmten Bewegungsraums zu detektieren, wobei bei deren Detektion das Kollisionsverhinderungssystem veranlasst, dass die automatisch geführte mobile Plattform entweder langsamere Bewegungen ausführt oder die Bewegung gänzlich unterbrochen wird. Durch den Aufbau mit gekoppeltem Six-DOF-Messhilfsmittelmodul wird der Bewegungsraum der automatisch geführten mobilen Plattform erweitert. In welcher Gestalt sich dieser Bewegungsraum erweitert hängt dabei vom Aufbau, d.h. von dem Six-DOF-Messhilfsmittelmodul und daran gekoppelten Sensoraufsätzen ab. Dabei kann das Six-DOF-Messhilfsmittelmodul dazu konfiguriert sein dem Kollisionsverhinderungssystem Kopplungsinformation bereitzustellen, sodass das Kollisionsverhinderungssystem basierend darauf den Bewegungsraum der automatisch geführten mobilen Plattform entsprechend dem Aufbau erweitern kann. Dabei kann die Kopplungsinformation Information über die geometrische Ausgestaltung des Sensoraufsatzes und dessen Posenrelation zum Six-DOF-Messhilfsmittelmodul betreffen.

Gemäss einer Ausführungsform kann das Six-DOF-Messhilfsmittelmodul eine Speisung zur Versorgung des Six-DOF-Messhilfsmittelmoduls mit elektrischem Strom aufweisen, wobei die Speisung über die Objektschnittstelle bereitgestellt wird, und dazu ausgelegt ist den elektrischen Strom alternativ sowohl über eine Batterie- als auch eine Netz-Stromquelle zu speisen.

Gemäss einer weiteren Ausführungsform kann die Speisung eine Stromquelle alternativ sowohl über den angekoppelten Haltegriff als auch über die angekoppelte mobile Plattform und somit über die Objektschnittstelle mit dem Six-DOF-Messhilfsmittelmodul verbinden.

Gemäss einer weiteren Ausführungsform kann die Speisung dazu konfiguriert sein die visuellen Markierungen, insbesondere die Lichtpunkte, und über die Sensoraufsatzkopplungsvorrichtung und somit über die Sensorschnittstelle, angekoppelte Sensoraufsätze, mit elektrischem Strom zu versorgen.

Gemäss einer weiteren Ausführungsform kann das Six-DOF-Messhilfsmittelmodul eine Verbraucherstromregulierungsfunktionalität mit Stromversorgungsanzeige aufweisen, wobei die Verbraucherstromregulierungsfunktionalität eine zur Speisung verbundene Stromquelle identifiziert und mittels der Stromversorgungsanzeige anzeigt, und im Falle einer verbundenen Batterie-Stromquelle ferner einen Ladepegel der Batterie-Stromquelle ermittelt und mittels der Stromversorgungsanzeige anzeigt und basierend auf dem Ladepegel den Stromverbrauch des Six-DOF-Messhilfsmittelmoduls reguliert.

Über die Stromversorgungsanzeige kann die Verbraucherstromregulierungsfunktionalität beispielsweise mittels Status LEDs, eines alphanumerischen Displays oder einer anderen Anzeigevorrichtung, welche am Körper angeordnet ist eine angeschlossene Stromquelle für einen Benutzer identifizierbar anzeigen. Bei einer angeschlossenen Batterie-Stromquelle kann die Verbraucherstromregulierungsfunktionalität ebenfalls den aktuellen Ladepegel der Batterie über die Stromversorgungsanzeige anzeigen und gleichzeitig basierend auf dem Ladepegel den Verbraucherstrom regulieren. Somit kann beispielsweise die Helligkeit der visuellen Markierungen ausgebildet als Lichtpunkte reduziert werden um den Verbraucherstrom zu regulieren. Ebenso können auch sensoraufsatzspezifische Parameter basierend auf dem Ladepegel der Batterie angepasst werden um den Verbraucherstrom zu regulieren.

Die Erfindung betrifft ebenfalls ein Six-DOF-Messsystem mit einem erfindungsgemässen Six-DOF-Messhilfsmittelmodul und einem Lasertracker mit einer Positions- und Orientierungsbestimmungsfunktionalität zur Bestimmung einer Position und Orientierung des Messhilfsmittelmoduls, wobei der Lasertracker dazu konfiguriert ist basierend auf Kopplungsinformation betreffend einen angekoppelten und abgekoppelten Zustand eines Sensoraufsatzes, eines Haltegriffs oder einer mobilen Plattform, und die Identifikation eines gekoppelten Sensoraufsatzes, eines gekoppelten Haltegriffs oder einer gekoppelten mobilen Plattform, Messinformation, und dem von den visuellen Markierungen gebildeten Muster 3D-Koordinaten von zu vermessenden Punkten einer Objektoberfläche zu bestimmen.

Der Lasertracker weist dabei typischerweise eine Basis und ein relativ zur Basis bewegbares Oberteil mit einem Teleskop auf. Das Teleskop ist dazu ausgelegt Laserstrahlung in Richtung eines anzielbaren kooperativen Ziels/Zielpunkts, beispielsweise Reflektors, unter einem bestimmbaren Winkel auszusenden. Der Lasertracker weist typischerweise ebenfalls Detektionseinheiten und eine mit den Detektionseinheiten verbundene Recheneinheit auf. Die Detektionseinheiten sind unter anderem dazu ausgelegt Laserstrahlung, welche von einem angezielten Zielpunkt reflektiert wird zu detektieren und basierend darauf die Winkel unter welchen ein Zielpunkt angezielt wird zu bestimmen und eine Distanz zu dem angezielten Zielpunkt zu ermitteln. Eine Detektionseinheit des Lasertrackers kann ebenfalls als Bilderfassungseinheit mit Bildauswertefunktionalität ausgebildet sein. Diese Bilderfassungseinheit kann beispielsweise einen Kamerasensor aufweisen, welcher dazu konfiguriert ist von visuellen Markierungen gebildete Muster auf eine Ebene zu projizieren bzw. abzubilden. Mittels der Bildauswertefunktionalität kann von der Recheneinheit ein orientierungsspezifisches Muster identifiziert werden bzw. eine Änderung des Musters einer Orientierungsänderung des Six-DOF-Messhilfsmittelmoduls zugeordnet werden. Der Lasertracker hat typischerweise eine Posenbestimmungsfunktionalität welche beispielsweise auf einer Bilderfassungseinheit mit Bildauswertefunktionalität basiert.

Offenbart ist ebenfalls ein Computerprogrammprodukt mit Programmcode, der bei dessen Ausführung einen Computer oder mehrere zu einem Computer verbundene Recheneinheiten dazu anweist, basierend auf Kopplungsinformation betreffend einen angekoppelten und abgekoppelten Zustand eines Sensoraufsatzes, eines Haltegriffs oder einer mobilen Plattform, und die Identifikation eines gekoppelten Sensoraufsatzes, eines gekoppelten Haltegriffs oder einer gekoppelten mobilen Plattform, Messinformation, und einem von visuellen Markierungen gebildeten Muster eines erfindungsgemässen Six-DOF-Messhilfsmittelmoduls, 3D-Koordinaten von zu vermessenden Punkten einer Objektoberfläche zu bestimmen, insbesondere und - im Falle einer Ankopplung des Körpers an eine automatisch geführte mobile Plattform mit Kollisionsverhinderungssystem - Kopplungsinformation dem Kollisionsverhinderungssystem zur Verhinderung von Kollisionen innerhalb eines Bewegungsraums der automatisch geführten mobilen Plattform mit gekoppeltem Six-DOF-Messhilfsmittelmodul bereitzustellen.

Der Computer kann auch dazu angewiesen werden - im Falle eines an die Objektkopplungsvorrichtung angekoppelten Objekts - alternativ sowohl in abgekoppeltem Kopplungszustand der Sensoraufsatzkopplungsvorrichtung als auch bei abgenommener Sensoraufsatzkopplungsvorrichtung eine Pose des angekoppelten Objekts in bis zu sechs Freiheitsgraden zu bestimmen.

### -KURZE BESCHREIBUNG DER FIGUREN-

Das erfindungsgemässe Six-DOF-Messhilfsmittelmodul wird nachfolgend anhand von in den Figuren schematisch dargestellten konkreten Ausführungsbeispielen rein beispielhaft näher beschrieben, wobei auch auf weitere Vorteile der Erfindung eingegangen wird. Im Einzelnen zeigen:
- Figur 1: ein Six-DOF-Messhilfsmittelmodul gemäss einer Ausführungsform;
- Figur 2: das Six-DOF-Messhilfsmittelmodul gemäss weiterer Ausführungsformen in unterschiedlichen Kopplungszuständen;
- Figur 3: das Six-DOF-Messhilfsmittelmodul gemäss einem weiteren Kopplungszustand;
- Figur 4: eine weitere Ausführungsform des Six-DOF-Messhilfsmittelmoduls;
- Figur 5: eine weitere mögliche Ausführungsform des Six-DOF-Messhilfsmittelmoduls; und
- Figur 6: eine weitere mögliche Ausführungsform des Six-DOF-Messhilfsmittelmoduls.

### -DETAILLIERTE BESCHREIBUNG DER ERFINDUNG-

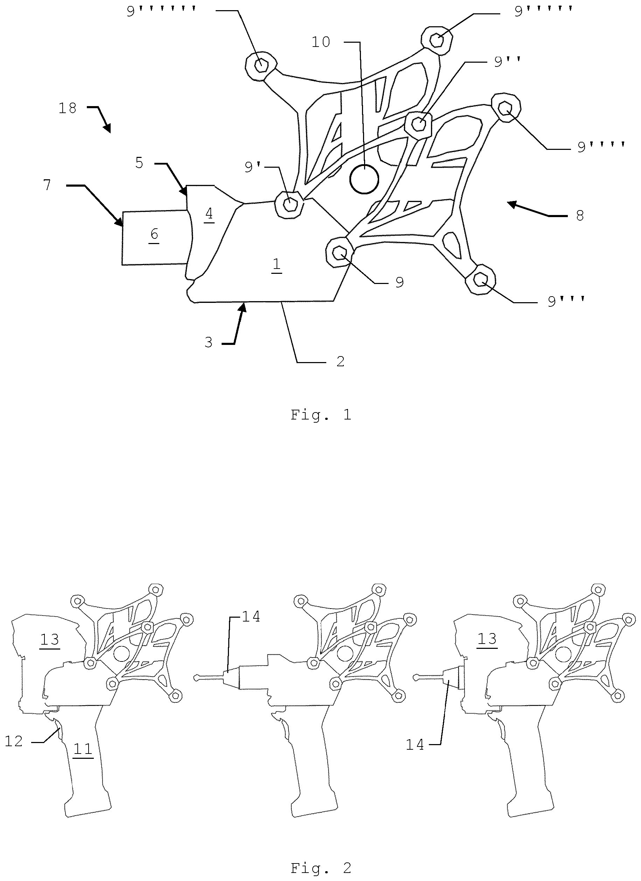

Figur 1 zeigt beispielhaft ein Six-DOF-Messhilfsmittelmodul gemäss einer möglichen Ausführungsform. Dabei soll die Bezeichnung Six-DOF in dem Sinne verstanden werden, als dass es durch das Messhilfsmittelmodul ermöglicht wird die Lage und Position, d.h. die Pose der Vorrichtung wie sie in Figur 1 gezeigt ist und somit auch von mit der Vorrichtung gekoppelter Objekte bzw. Sensoraufsätze in bis zu sechs Freiheitsgraden (Six-DOF) zu bestimmen. Das Six-DOF-Messhilfsmittelmodul weist einen Körper/Basiskörper/Modulkörper 1 mit einer Objektkopplungsvorrichtung 2 mit einer Objektschnittstelle 3, einer Sensoraufsatzkopplungsvorrichtung 18 mit einem ersten Kopplungsteil 4 mit einer ersten Kopplungsteilschnittstelle 5 und einem zweiten Kopplungsteil 6 mit einer zweiten Kopplungsteilschnittstelle 7 auf. Eine Kopplungsvorrichtung hat jeweils spezifische strukturelle Kopplungsmerkmale, wobei Sensoraufsätze bzw. Objekte, welche an die entsprechende Kopplungsvorrichtung gekoppelt werden können zu diesen spezifischen Kopplungsmerkmalen korrespondierende strukturelle Kopplungsmerkmale aufweisen. Diese zueinander korrespondierenden strukturellen Merkmale ermöglichen, ein An- bzw. Abkoppeln von dafür vorgesehenen Sensoraufsätzen bzw. Objekten an den Körper 1 in einer bestimmten Weise, sodass in angekoppeltem Zustand der Sensoraufsatz bzw. das Objekt eine definierte Posenrelation zum Körper 1 aufweist. Die Posenrelation bezieht sich dabei auf eine bestimmte Position und Orientierung relativ zum Körper 1. Wie schematisch in Figur 1 gezeigt sind die Kopplungsvorrichtungen an unterschiedlichen Bereichen am Körper 1 angeordnet und haben eine definierte Posenrelation zum Körper. Jede der Kopplungsvorrichtungen ist dazu ausgelegt eine spezifische Art von Sensoraufsätzen oder Objekten zu koppeln. So ist die in Figur 1 gezeigte Objektkopplungsvorrichtung 2 dazu ausgelegt alternativ sowohl einen Haltegriff 11 an den Körper 1 zu koppeln als auch dazu den Körper 1 an ein Objekt, wie beispielsweise eine mobile Plattform zu koppeln. Die Ankopplung eines Haltegriffs 11 dient dazu das Six-DOF-Messhilfsmittelmodul in einem manuell geführten Modus zu nutzen. Mittels der Kopplung des Körpers an eine automatisch geführte mobile Plattform kann das Six-DOF-Messhilfsmittelmodul beispielsweise in einem automatisch geführten Modus genutzt werden. Neben der Objektkopplungsvorrichtung weist der Körper 1 zwei Kopplungsteile 4 und 6 auf, wobei die zwei Kopplungsteile dazu ausgelegt sind sowohl taktil- als auch berührungslos messende Sensoraufsätze an den Körper zu koppeln. Der erste Kopplungsteil 4 ist dabei dazu ausgelegt zumindest berührungslos messende laserscannerbasierte Sensoraufsätze 13 an den Körper 1 zu koppeln. Laserscannerbasierte Sensoraufsätze nutzen eine Laserlichtquelle zur Erzeugung von Distanzmessstrahlung, die dann unter bestimmten Winkeln in Richtung Objektoberfläche ausgesendet wird. Diese Distanzmessstrahlung wird über die zu vermessende Objektoberfläche gescannt, sodass die zu vermessenden Punkte der Objektoberfläche von der Distanzmessstrahlung abgetastet werden. Ein Teil dieser Distanzmessstrahlung wird dann von den Oberflächenpunkten in Richtung des laserscannerbasierten Sensoraufsatzes reflektiert und von diesem distanzsensitiv detektiert. Die distanzsensitive Detektion kann beispielsweise auf einem der Prinzipien aus Triangulation oder gegebenenfalls auch Laufzeitmessung basieren. Auf diese Weise werden Distanzen zu den zu vermessenden Punkten der Objektoberfläche ermittelt. Basierend auf den so ermittelten Distanzen und der referenzierten Position und Lage des laserscannerbasierten Sensoraufsatzes werden dann 3D-Koordinaten der abgetasteten Oberflächenpunkte bestimmbar. Der zweite Kopplungsteil 6 ist dazu ausgelegt zumindest taktil messende Sensoraufsätze an den Körper 1 zu koppeln. Bei den taktil messenden Sensoraufsätzen basiert die Bestimmung der Distanz zu einem Oberflächenpunkt auf dessen Berührung beispielsweise mit einem Ende eines Taststiftes. Bei Berührung ist die Distanz zum Oberflächenpunkt über die Geometrie des Taststifts und dessen Ende bestimmbar. Jede der beschriebenen Kopplungsvorrichtungen weist dabei eine für die Kopplungsvorrichtung spezifische Schnittstelle - eine Kopplungsteilschnittstelle 5, 7 bzw. Objektschnittstelle 3 - auf. Diese Schnittstelle korrespondiert mit einem Schnittstellengegenstück seitens des jeweiligen koppelbaren Sensoraufsatzes bzw. Objekts. Über die jeweilige Schnittstelle werden der Körper 1 und der angekoppelte Sensoraufsatz bzw. das angekoppelte Objekt funktional miteinander verbunden. D.h. über die Verbindung bzw. über die Schnittstellen können sowohl Daten/Informationen/Signale gesendet als auch elektrischer Strom geleitet werden. Dabei ermöglicht die jeweilige Schnittstelle eine Kommunikation - betreffend bspw. Daten/Information/Signal - als auch elektrische Verbindung zwischen einem angekoppelten Sensoraufsatz und dem Messhilfsmittelmodul bzw. einem angekoppelten Objekt und dem Messhilfsmittelmodul. Des Weiteren weist das Six-DOF-Messhilfsmittelmodul visuelle Markierungen 9, 9', 9", 9‴, 9ʺʺ, 9ʺ‴, 9‴‴ in einem Markierungsbereich 8 auf. Die visuellen Markierungen sind in definierter räumlicher Beziehung zueinander angeordnet und formen dadurch ein spezifisches Muster, welches dazu dient, die Orientierung des Körpers für einen Lasertracker bestimmbar zu machen. Der Markierungsbereich kann bspw. durch eine Halterung die über eine entsprechende Schnittstelle posenfest und fix mit dem Körper verbunden ist definiert sein. Aufgrund der posenfesten Verbindung mit dem Körper ist dann auch die Orientierung des Körpers mittels der visuellen Markierungen durch einen Lasertracker bestimmbar. Wie beispielhaft in Figur 1 gezeigt können die visuellen Markierungen 9, 9', 9", 9‴, 9ʺʺ, 9ʺ‴, 9‴‴ Lichtpunkte sein, wobei eine bestimmte Gruppe von Lichtpunkten jeweils einem Gesicht des Six-DOF-Messhilfsmittelmoduls zugeordnet ist. Diese Lichtpunkte können beispielsweise von einer Lichtquelle an den jeweiligen Punkten oder mittels Reflektion von dafür vorgesehenem Licht an den jeweiligen Punkten erzeugt werden. Ebenso könnte das Licht einer einzelnen Lichtquelle über Lichtleiter zu den jeweiligen Punkten geleitet werden. Diese Lichtpunkte erzeugen ein orientierungsspezifisches Muster, welches von einem Lasertracker zur Bestimmung der Orientierung des Six-DOF-Messhilfsmittelmoduls verwendet werden kann. Dazu kann beispielsweise das Lichtpunktmuster zur Auswertung auf eine Ebene projiziert bzw. abgebildet werden. Die Bestimmung der Orientierung des Six-DOF-Messhilfsmittelmoduls basiert dann beispielsweise darauf, dass sich in Abhängigkeit der Orientierung das Muster aus den Lichtpunktprojektionen orientierungsspezifisch ändert. Beispielsweise nähern sich die Lichtpunktprojektionen zweier Lichtpunkte einander an oder entfernen sich voneinander bei einer Rotation des Six-DOF-Messhilfsmittelmoduls um eine Achse, welche quer zu der Verbindungsachse, welche die zwei Lichtpunkte miteinander verbindet angeordnet ist und gleichzeitig in einer zur Projektionsebene parallel angeordneten Ebene liegt. Des Weiteren weist das in Figur 1 gezeigte Six-DOF-Messhilfsmittelmodul einen Reflektor 10 auf, welcher dazu ausgelegt ist auf ihn einfallende Strahlung zu reflektieren. Die von dem Reflektor 10 reflektierte Strahlung macht die Position des Six-DOF-Messhilfsmittelmoduls für einen Lasertracker bestimmbar. Beispielsweise kann der Reflektor mit Laserstrahlung eines Lasertrackers angestrahlt werden, welche dann von dem Reflektor in Richtung Lasertracker reflektiert wird. Basierend auf der Detektion der reflektierten Laserstrahlung kann der Lasertracker die genauen Winkel unter welchen der Reflektor angestrahlt wird bestimmen. Basierend auf vom Reflektor reflektierter Laserstrahlung kann ebenfalls die Distanz zum Reflektor ermittelt werden. Basierend auf der Winkelinformation betreffend die Richtung der ausgestrahlten Laserstrahlung und der bestimmten Distanz zum Reflektor kann die Position des Reflektors und somit des Six-DOF-Messhilfsmittelmoduls bestimmt werden. Des Weiteren ist dem Six-DOF-Messhilfsmittelmodul eine Recheneinheit zugeordnet. Die Recheneinheit kann mehrere Untereinheiten aufweisen. Untereinheiten der Recheneinheit können auch vom Six-DOF-Messhilfsmittelmodul umfasst sein. Die Recheneinheit ist mit den Schnittstellen kommunikativ verbunden. Die kommunikative Verbindung kann dabei kabelgebunden, leiterbahnbasiert oder auch wireless erfolgen. Diese kommunikative Verbindung ermöglicht einen Signal-/Daten-/Informationsaustausch zwischen der Recheneinheit und an den Körper gekoppelten Sensoraufsätzen bzw. Objekten und gegebenenfalls auch zwischen der Recheneinheit und den visuellen Markierungen. Diese austauschbaren Signale/Daten/Informationen können beispielsweise Kopplungsinformation betreffend an- und abgekoppelte Kopplungszustände und die Identifikation eines angekoppelten Sensoraufsatzes bzw. Objekts umfassen. Des Weiteren können diese austauschbaren Signale/Daten/Informationen beispielsweise von den Sensoraufsätzen erzeugte Messinformation oder auch von angekoppelten Objekten erzeugte Signale betreffen. Dadurch wird der Recheneinheit eine hochpräzise Bestimmung von 3D-Koordinaten von zu vermessenden Punkten einer Objektoberfläche basierend auf Kopplungsinformation, Messinformation und basierend auf dem von den visuellen Markierungen gebildeten Muster ermöglicht. Die spezifische Kombination der angekoppelten Sensoraufsätze und Objekte stellt eine höchst flexible Verwendung von sowohl taktil als auch berührungslos messenden Sensoraufsätzen bereit, wobei das Six-DOF-Messhilfsmittelmodul eine hochpräzise Bestimmung von 3D-Koordinaten von zu vermessenden Punkten einer Objektoberfläche ermöglicht.

In Figur 2 ist der Körper 1 mit einem an die Objektkopplungsvorrichtung gekoppelten Haltegriff 11 mit Auslösemechanismus 12 gezeigt. Über die Kopplungsteile können wie schematisch in Figur 2 dargestellt unterschiedliche Sensoraufsätze an den Körper gekoppelt werden. So kann über den ersten Kopplungsteil bspw. ein laserscannerbasierter Sensoraufsatz 13 posenfest an den Körper gekoppelt werden, wobei der zweite Kopplungsteil den abgekoppelten Kopplungszustand aufweist. Ebenso kann beispielsweise der erste Kopplungsteil den abgekoppelten Zustand aufweisen, wobei über den zweiten Kopplungsteil ein taktil messender Sensoraufsatz 14 an den Körper gekoppelt ist. Ebenso können beide Kopplungsteile gleichzeitig jeweils einen Sensoraufsatz posenfest an den Körper koppeln. Die Konfigurationen wie sie in Figur 2 gezeigt sind entsprechen Konfigurationen, welche für die Nutzung des Six-DOF-Messhilfsmittelmoduls in einem manuell geführten Modus konzipiert sind. Dazu weist der Haltegriff 11 den Auslösemechanismus 12 in Form eines Knopfes oder einer Taste auf welcher abzugsartig betätigt werden kann. Der Knopf kann auch am Körper selber angebracht sein. Es kann unterschiedliche Arten/Varianten der Betätigung geben. Beispielsweise betrifft die einfachste Form einer Betätigung des Auslösemechanismus das einmalige Betätigen. Dabei wird der Knopf bzw. die Taste abzugsartig gedrückt und anschliessend wieder losgelassen. Eine andere Variante der Betätigung des Auslösemechanismus betrifft beispielsweise das über einen bestimmten Auslösezeitraum Gedrückthalten des Knopfes bzw. der Taste. Bei Betätigung des Auslösemechanismus erzeugt dieser ein Auslösesignal als Messinformation, wobei bspw. die Recheneinheit basierend auf diesem Auslösesignal die Variante der Betätigung erkennt und bestimmt. Bei angekoppeltem Haltegriff 11 und in Abhängigkeit der angekoppelten Sensoraufsätze kann die Recheneinheit bspw. ferner basierend auf dem Auslösesignal oder basierend auf den Auslösesignalen die 3D-Koordintaten von zu vermessenden Punkten einer Objektoberfläche bestimmen. Ausgehend von einer Konfiguration wie mittig in der Figur 2 gezeigt, bei der ein taktil messender Sensoraufsatz an den Körper gekoppelt ist erkennt die Recheneinheit diesen taktil messenden Sensoraufsatz und auch den angekoppelten Haltegriff mit Auslösemechanismus. Dann kann die Recheneinheit bei einmaliger Betätigung des Auslösemechanismus die 3D-Koordinaten eines mit der Rubinkugel des Taststifts in Berührung stehenden Oberflächenpunktes bestimmen. Als weiteres Beispiel, ausgehend von einer Konfiguration wie links in Figur 2 gezeigt, bei der ein laserscannerbasierter Sensoraufsatz an den Körper gekoppelt ist kann die Bestimmung der 3D-Koordinaten von zu vermessenden Oberflächenpunkten ebenfalls basierend auf der Betätigung des Auslösemechanismus erfolgen. Bspw. erkennt die Recheneinheit den laserscannerbasierten Sensoraufsatz und den angekoppelten Haltegriff mit Auslösemechanismus. Die Recheneinheit beginnt dann fortlaufend Koordinateninformation von mit dem Distanzmessstrahl des laserscannerbasierten Sensoraufsatzes abgetasteten Punkten zu generieren bzw. zu bestimmen. Auf diese Weise fortlaufend generierte Koordinateninformation kann dann basierend auf einem Auslösesignal, welches durch Betätigen des Auslösemechanismus erzeugt wird als Koordinateninformation von zu vermessenden Punkten markiert werden. Die Markierung als Koordinateninformation von zu vermessenden Punkten findet bspw. für die Dauer eines Auslösezeitraumes statt. Danach wird die fortlaufend generierte Koordinateninformation nicht mehr als Koordinateninformation von zu vermessenden Punkten markiert, sondern lediglich weiter fortlaufend als Koordinateninformation von abgetasteten Punkten generiert. Entscheidend ist dabei, dass der Auslösezeitraum basierend auf einem oder mehreren Auslösesignalen bestimmt werden kann. Es kann mehrere Varianten der Betätigung des Auslösemechanismus geben, wobei die durch die jeweilige Variante erzeugten Auslösesignale den Auslösezeitraum bestimmen. Beispielsweise kann die Recheneinheit den Zeitraum zwischen einem ersten einmaligen Betätigen des Auslösemechanismus und einem zweiten einmaligen Betätigen des Auslösemechanismus als Auslösezeitraum bestimmen. Alternativ kann die Recheneinheit den Zeitraum währenddessen der Auslösemechanismus bzw. die Taste/der Knopf gedrückt gehalten wird als Auslösezeitraum bestimmen. Ist kein Haltegriff mit Auslösemechanismus an den Körper gekoppelt, dann kann das Auslösesignal auch von der Recheneinheit erzeugt werden. Ist ein taktil messender Sensoraufsatz an den Körper gekoppelt, dann kann ein Auslösesignal auch basierend auf der Berührung des messenden Sensoraufsatzendes mit der Oberfläche erzeugt werden.

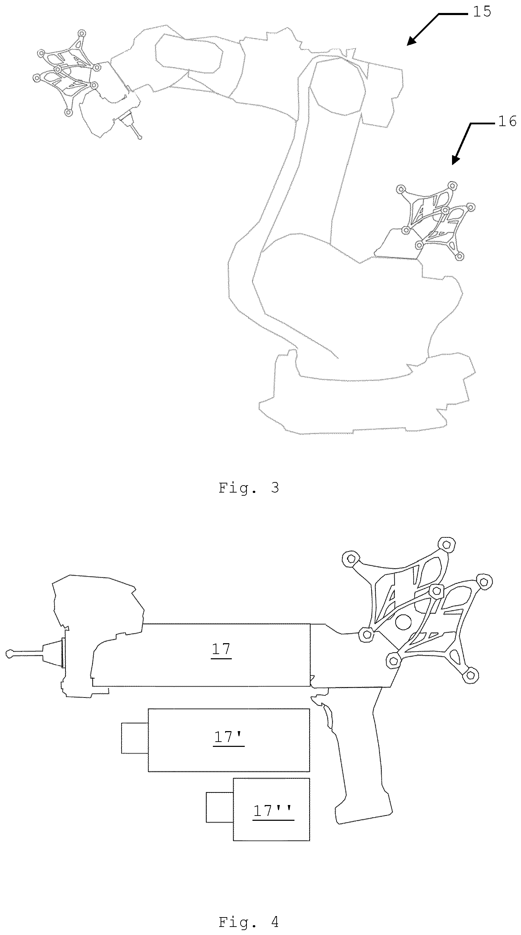

Die Objektkopplungsvorrichtung ist erfindungsgemäss auch dazu ausgestaltet den Körper an eine mobile Plattform, beispielsweise an ein Ende eines Roboterarms 15 zu koppeln wie schematisch in Figur 3 gezeigt. In dieser Konfiguration wird das Six-DOF-Messhilfsmittelmodul in einem automatisch geführten Modus verwendet. Ein solcher Roboterarm wie schematisch in Figur 3 gezeigt kann entweder in einem dafür vorgesehenen Käfig automatisch bewegt werden, wobei der Käfig verhindert, dass sich Kollisionen des bewegten Roboterarmes mit Objekten oder Menschen ereignen indem diese von dem Bewegungsraum des Roboterarms ferngehalten werden oder alternativ ohne Käfig betrieben werden. Wird ein solcher Roboterarm ohne Käfig betrieben, dann ist der Roboterarm üblicherweise mit einem Kollisionsverhinderungssystem ausgestattet, welches anstelle des Käfigs Kollisionen verhindert. Der Roboterarm hat entsprechend seinem Aufbau einen bestimmten Bewegungsraum innerhalb welchem er Bewegungen ausführt. Das Kollisionsverhinderungssystem des Roboterarms weist bspw. Näherungssensoren auf, welche mit ihren Sensorsichtfeldern zumindest den definierten Bewegungsraum des Roboterarms abdecken. Diese Näherungssensoren dienen dazu Objekte und Menschen innerhalb des bestimmten Bewegungsraums zu detektieren, wobei bei deren Detektion das Kollisionsverhinderungssystem den Roboterarm anweist entweder langsamere Bewegungen auszuführen oder die Bewegungen gänzlich zu unterbrechen. Wie kurz erwähnt ist dieser bestimmte Bewegungsraum durch die Bauweise des Roboterarms insbesondere dessen maximal mögliche "Ausstreckung" vorgegeben. Wird nun der Körper wie in Figur 3 gezeigt an einen solchen Roboterarm 15 gekoppelt, welcher nicht in einem Käfig betrieben wird, dann erweitert sich aufgrund des Aufbaus der Bewegungsraum des Roboterarms. Wie sich dieser Bewegungsraum des Roboterarms ändert ist dabei auch abhängig von den an den Körper gekoppelten Sensoraufsätzen. Die dem Six-DOF-Messhilfsmittelmodul zugeordnete Recheneinheit kann in so einem Fall dazu konfiguriert sein das Kollisionsverhinderungssystem des Roboterarms anzuweisen den bestimmten Bewegungsraum so zu erweitern, dass der erweiterte Bewegungsraum Bewegungen des Roboterarms mit angekoppeltem Körper mit angekoppelten Sensoraufsätzen miteinschliesst. Die Anweisung erfolgt dabei basierend auf Kopplungszuständen und Kopplungsinformationen. Die Anweisung führt dazu, dass die Näherungssensoren mit Ihren Sensorsichtfeldern einen entsprechend erweiterten Bewegungsraum betreffend das Vorhandensein eines Objekts bzw. eines Menschen darin beobachten. Bei einer Kopplung des Körpers an eine mobile Plattform wie beispielsweise an einen Roboterarm, kann ein Auslösesignal auch von der Recheneinheit bzw. dem Roboterarm erzeugt werden, wobei das Auslösesignal einen gekoppelten Sensoraufsatz dazu anweist Koordinateninformationen zu ermitteln.

Ebenfalls schematisch in Figur 3 gezeigt ist eine weitere Ausführungsform des Six-DOF-Messhilfsmittelmoduls. Gemäss dieser Ausführungsform können die Kopplungsvorrichtungen abnehmbar mit dem Körper verbunden sein. Gemäss dieser Ausführungsform können beispielsweise die Kopplungsteile abgenommen werden, wodurch der Körper schlanker und handlicher wird und auch platzsparender einsetzbar ist. Dieser um die Kopplungsteile abgespeckte Körper 16 kann über die Objektkopplungsvorrichtung an eine mobile Plattform oder beispielsweise an die Basis eines Roboters oder Roboterarms gekoppelt werden, wie in Figur 3 gezeigt, wobei über die Bestimmung der Position und Orientierung des Six-DOF-Messhilfsmittelmoduls eine exakte Positionierung des Roboters bzw. Roboterarms ermöglicht wird.

Figur 4 zeigt schematisch eine weitere Ausführungsform des Six-DOF-Messhilfsmittelmoduls. Gemäss dieser Ausführungsform können die beiden Kopplungsteile ferner dazu ausgestaltet sein die jeweiligen Sensoraufsätze über ein variables Adapterstück 17, 17', 17" posenfest an den Körper zu koppeln. In gekoppeltem Zustand befindet sich der jeweilige Sensoraufsatz aufgrund der Bauweise des Adapters in definierter Lage und Position zu dem Körper. Die Information betreffend die Bauweise des Adapterstückes und somit betreffend die Lage und Position des über das Adapterstück an den Körper gekoppelten Sensoraufsatzes in Relation zu dem Körper kann in Form von Kopplungsinformation der Recheneinheit bereitgestellt werden. Basierend auf dieser Kopplungsinformation kann die Recheneinheit Koordinateninformation von zu vermessenden Oberflächenpunkten mittels an Adapterstücke gekoppelter Sensoraufsätze bestimmen.

Vorteilhafterweise wird das Six-DOF-Messhilfsmittelmodul in Verbindung mit einem Lasertracker genutzt und ist auch dafür konzipiert. In einem solchen Messsystem mit Six-DOF-Messhilfsmittelmodul und Lasertracker weist der Lasertracker üblicherweise eine Basis und ein relativ zur Basis bewegbares Oberteil mit einem Teleskop auf. Das Teleskop ist dazu ausgelegt Laserstrahlung in Richtung eines anzielbaren kooperativen Ziels/Zielpunkts, beispielsweise Reflektors, unter einem bestimmbaren Winkel auszusenden. Der Lasertracker weist ebenfalls Detektionseinheiten und eine mit den Detektionseinheiten verbundene Recheneinheit auf. Die Detektionseinheiten sind unter anderem dazu ausgelegt Laserstrahlung, welche von einem angezielten Zielpunkt reflektiert wird zu detektieren und basierend darauf die Winkel unter welchen ein Zielpunkt angezielt wird zu bestimmen und eine Distanz zu dem angezielten Zielpunkt zu ermitteln. Eine Detektionseinheit des Lasertrackers kann ebenfalls als Bilderfassungseinheit mit Bildauswertefunktionalität ausgebildet sein. Diese Bilderfassungseinheit kann beispielsweise einen Kamerasensor aufweisen, welcher dazu konfiguriert ist von visuellen Markierungen gebildete Muster auf eine Ebene zu projizieren bzw. abzubilden. Mittels der Bildauswertefunktionalität kann von der Recheneinheit ein orientierungsspezifisches Muster identifiziert werden bzw. eine Änderung des Musters einer Orientierungsänderung des Six-DOF-Messhilfsmittelmoduls zugeordnet werden. Der Lasertracker hat typischerweise eine Posenbestimmungsfunktionalität welche beispielsweise auf einer Bilderfassungseinheit mit Bildauswertefunktionalität basiert wie oben beschrieben.

Die Recheneinheit des Lasertrackers kann somit dazu konfiguriert sein basierend auf der bestimmten Position des Six-DOF-Messhilfsmittelmoduls, der bestimmten Orientierung des Six-DOF-Messhilfsmittelmoduls, der Kopplungsinformation und der Messinformation 3D-Koordinaten von zu vermessenden Punkten einer Oberfläche zu bestimmen.

Das Six-DOF-Messhilfsmittelmodul kann ebenfalls eine Speisung aufweisen. Diese Speisung kann unter anderem dazu dienen angekoppelte Sensoraufsätze und gegebenenfalls auch die visuellen Markierungen mit elektrischem Strom zu versorgen. Die Speisung erfolgt dabei über die Objektschnittstelle der Objektkopplungsvorrichtung und kann alternativ sowohl mit einer Batterie- als auch mit einer Netz-Stromquelle verbunden sein. Bei angekoppeltem Haltegriff kann beispielsweise der Haltegriff eine Kabelverbindung zu einer Netz-Stromquelle aufweisen, wobei der elektrische Strom über den Haltegriff und über die Objektschnittstelle der Objektkopplungsvorrichtung gespeist wird. Gleichwohl kann der Haltegriff alternativ mit einer Batterie als Stromquelle verbunden sein. Ist der Körper beispielsweise an eine mobile Plattform gekoppelt kann die Stromversorgung auch über eine an der mobilen Plattform angeschlossenen Stromquelle erfolgen.

Das Six-DOF-Messhilfsmittelmodul kann ebenfalls eine Verbraucherstromregulierungsfunktionalität aufweisen mit einer Stromversorgungsanzeige. Über die Stromversorgungsanzeige kann die Verbraucherstromregulierungsfunktionalität beispielsweise über Status LEDs, ein alphanumerisches Display oder eine andere Anzeigevorrichtung, welche am Körper angeordnet ist eine angeschlossene Stromquelle für einen Benutzer identifizierbar anzeigen. Bei einer angeschlossenen Batterie-Stromquelle kann die Verbraucherstromregulierungsfunktionalität ebenfalls den aktuellen Ladepegel der Batterie über die Stromversorgungsanzeige anzeigen und gleichzeitig basierend auf dem Ladepegel den Verbraucherstrom regulieren. Somit könnte beispielsweise die Helligkeit der visuellen Markierungen ausgebildet als Lichtpunkte reduziert werden um den Verbraucherstrom zu regulieren. Ebenso könnten auch sensoraufsatzspezifische Parameter basierend auf dem Ladepegel der Batterie angepasst werden um den Verbraucherstrom zu regulieren.

Offenbart ist ebenfalls ein Computerprogrammprodukt mit Programmcode. Wird der Programmcode des Computerprogrammproduktes auf einer Recheneinheit ausgeführt wird diese dazu angewiesen 3D-Koordinaten von zu vermessenden Punkten zu bestimmen. Die Bestimmung der 3D-Koordinaten erfolgt mit der Recheneinheit als Teil eines beschriebenen Six-DOF-Messsystems. Die Recheneinheit wird angewiesen Kopplungsinformation, Messinformation und von visuellen Markierungen gebildete Muster zu ermitteln und basierend darauf 3D-Koordinaten von zu vermessenden Punkten zu bestimmen. Ist beispielsweise ein Haltegriff mit Auslösemechanismus an den Körper angekoppelt, dann wird die Recheneinheit dazu angewiesen die 3D-Koordinaten ferner basierend auf einem von dem Auslösemechanismus erzeugten Auslösesignal zu bestimmen. Ist der Körper beispielsweise über die Objektkopplungsvorrichtung an einen Endeffektor als Teil eines automatisch geführten Roboterarms angekoppelt, dann wird die Recheneinheit ferner dazu angewiesen basierend auf Kopplungsinformation der Sensoraufsatzkopplungsvorrichtung einen definierten Bewegungsraum des Roboterarms so zu einem erweiterten Bewegungsraum zu erweitern, dass der erweiterte Bewegungsraum Bewegungen des Roboterarms mit angekoppeltem Sensoraufsatz miteinschliesst. Ist der Körper über die Objektkopplungsvorrichtung an ein Objekt gekoppelt, beispielsweise an die Basis eines mobilen Roboterarms, dann wird die Recheneinheit dazu angewiesen Kopplungszustände der Sensoraufsatzkopplungsvorrichtung zu ermitteln. Wird der Recheneinheit von der Sensoraufsatzkopplungsvorrichtung ein abgekoppelter Zustand signalisiert oder befindet sich die Sensoraufsatzkopplungsvorrichtung nicht am Körper, dann wird die Recheneinheit dazu angewiesen hochpräzise die Position und/oder Orientierung des angekoppelten Objekts basierend auf dem von den visuellen Markierungen gebildeten Muster in bis zu sechs Freiheitsgraden zu bestimmen.

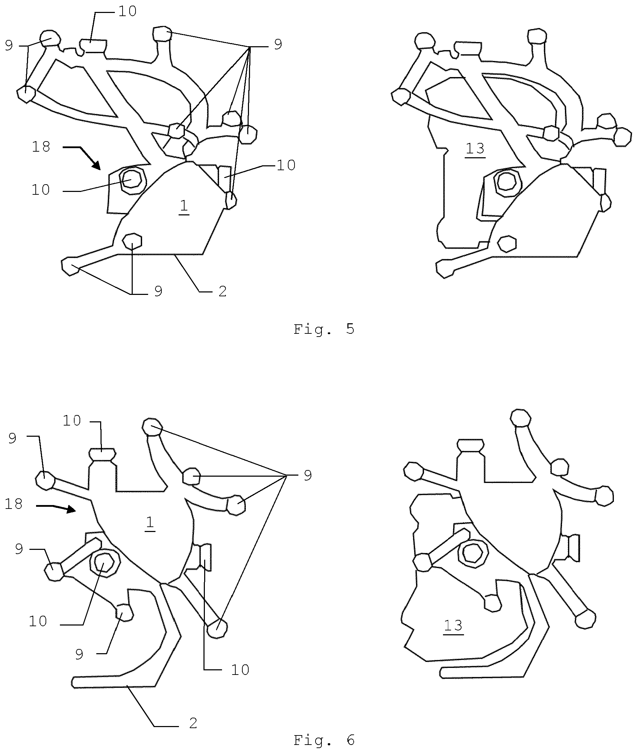

Figuren 5 und 6 zeigen weitere mögliche Ausgestaltungen eines erfindungsgemässen Six-DOF-Messhilfsmittelmoduls.

Es versteht sich, dass diese dargestellten Figuren nur mögliche Ausführungsbeispiele schematisch darstellen. Die verschiedenen Ansätze können erfindungsgemäss ebenso miteinander sowie mit optischen Messkonzepten oder Koordinatenmessmaschinen des Stands der Technik kombiniert werden.

## Patentansprüche

1. Six-DOF-Messhilfsmittelmodul zur Verwendung in einem einen Lasertracker zur Positions- und Orientierungsbestimmung des Six-DOF-Messhilfsmittelmoduls aufweisenden System zur Bestimmung von 3D-Koordinaten von zu vermessenden Punkten einer Objektoberfläche, mit
o einem Körper (1) mit
▪ einer Objektkopplungsvorrichtung (2) mit einer Objektschnittstelle (3), welche Objektkopplungsvorrichtung (2) dazu ausgestaltet ist über die Objektschnittstelle (3) alternativ sowohl einen Haltegriff (11) posenfest an den Körper (1) als auch den Körper posenfest an eine mobile Plattform zu koppeln,
▪ einer Sensoraufsatzkopplungsvorrichtung (18) mit einer Sensorschnittstelle, welche Sensoraufsatzkopplungsvorrichtung dazu ausgestaltet ist alternativ sowohl einen berührungslos messenden Sensoraufsatz (13), als auch einen taktil messenden Sensoraufsatz (14) über die Sensorschnittstelle posenfest an den Körper (1) zu koppeln, und
▪ visuellen Markierungen (9, 9', 9", 9''', 9ʺʺ, 9ʺ‴, 9‴‴), die in definierter räumlicher Beziehung ein Muster bildend an dem Körper in einem Markierungsbereich (8) angeordnet sind und für den Lasertracker die Orientierung des Six-DOF-Messhilfsmittelmoduls bestimmbar machen.

2. Six-DOF-Messhilfsmittelmodul nach Anspruch 1, wobei die Sensoraufsatzkopplungsvorrichtung (18) aufweist
∘ einen ersten Kopplungsteil (4) mit einer ersten Kopplungsteilschnittstelle (5), welcher erste Kopplungsteil (4) dazu ausgestaltet ist, mindestens einen berührungslos messenden Sensoraufsatz über die erste Kopplungsteilschnittstelle (5) posenfest an den Körper (1) zu koppeln, und
o einen zweiten Kopplungsteil (6) mit einer zweiten Kopplungsteilschnittstelle (7), welcher zweite Kopplungsteil (6) dazu ausgestaltet ist, mindestens einen taktil messenden Sensoraufsatz (14) über die zweite Kopplungsteilschnittstelle (7) posenfest an den Körper (1) zu koppeln.

3. Six-DOF-Messhilfsmittelmodul nach einem der vorhergehenden Ansprüche, wobei
∘ die Schnittstellen eine kommunikative Verbindung zwischen gekoppeltem Sensoraufsatz und Six-DOF-Messhilfsmittelmodul bzw. zwischen Haltegriff oder mobiler Plattform und dem Six-DOF-Messhilfsmittelmodul bereitstellen,
o das Six-DOF-Messhilfsmittelmodul dazu konfiguriert ist, zur Bestimmung von 3D-Koordinaten von zu vermessenden Punkten einer Objektoberfläche dem Lasertracker,
▪ Kopplungsinformation betreffend
• einen angekoppelten und einen abgekoppelten Zustand als Kopplungszustand, und
• die Identifikation eines gekoppelten Sensoraufsatzes (13, 14), eines gekoppelten Haltegriffs (11) oder einer gekoppelten mobilen Plattform, und
▪ Messinformation, bereitzustellen, und das von den visuellen Markierungen (9, 9', 9", 9‴, 9ʺʺ, 9ʺ‴, 9‴‴) gebildete Muster anzuzeigen.

4. Six-DOF-Messhilfsmittelmodul nach einem der vorhergehenden Ansprüche, wobei das Six-DOF-Messhilfsmittelmodul mindestens einen Sensoraufsatz aufweist aus einer Gruppe von Sensoraufsätzen mit
∘ berührungslos messenden Sensoraufsätzen, insbesondere einem Laserscanner-Sensoraufsatz, und
o taktil messenden Sensoraufsätzen.

5. Six-DOF-Messhilfsmittelmodul nach einem der Ansprüche 3 bis 4, wobei der Haltegriff (11) einen betätigbaren Auslösemechanismus (12) aufweist, welcher bei Betätigung ein Auslösesignal als Messinformation erzeugt.

6. Six-DOF-Messhilfsmittelmodul nach Anspruch 5, wobei das Six-DOF-Messhilfsmittelmodul dazu konfiguriert ist
o im Falle eines angekoppelten taktilen Sensoraufsatzes (14) basierend auf einem durch Betätigung des Auslösemechanismus erzeugten Auslösesignal dem Lasertracker Koordinateninformation als Messinformation zur Bestimmung von 3D-Koordinaten von zu vermessenden Punkten einer Objektoberfläche bereitzustellen, und
o im Falle eines angekoppelten berührungslos messenden Sensoraufsatzes, insbesondere eines Laserscanner-Sensoraufsatzes (13), dem Lasertracker Koordinateninformation als Messinformation zur Bestimmung von 3D-Koordinaten von zu vermessenden Punkten einer Objektoberfläche fortlaufend bereitzustellen, wobei fortlaufend bereitgestellte Koordinateninformation basierend auf einer Betätigung des Auslösemechanismus markiert wird.

7. Six-DOF-Messhilfsmittelmodul nach einem der vorhergehenden Ansprüche, wobei die visuellen Markierungen Lichtpunkte (9, 9', 9", 9"', 9ʺʺ, 9ʺ‴, 9‴‴) sind.

8. Six-DOF-Messhilfsmittelmodul nach einem der vorhergehenden Ansprüche, wobei der Körper (1) einen Reflektor (10) aufweist, der den visuellen Markierungen zugeordnet ist und die Position des Six-DOF-Messhilfsmittelmoduls für einen Lasertracker bestimmbar macht.

9. Six-DOF-Messhilfsmittelmodul nach einem der Ansprüche 3 bis 8, wobei
o die Sensoraufsatzkopplungsvorrichtung ferner dazu ausgelegt ist einen Sensoraufsatz über ein Adapterstück (17, 17', 17''), das posenfest mit dem Sensoraufsatz verbindbar ist, in einer durch das Adapterstück relativ zu der Sensoraufsatzkopplungsvorrichtung definierten Orientierung und Position an den Körper (1) zu koppeln, und
o die Kopplungsinformation ferner Information zur definierten Orientierung und Position des Sensoraufsatzes relativ zu der Sensoraufsatzkopplungsvorrichtung betrifft.

10. Six-DOF-Messhilfsmittelmodul nach einem der Ansprüche 3 bis 9, wobei das Six-DOF-Messhilfsmittelmodul dazu konfiguriert ist, in an eine automatisch geführte mobile Plattform mit Kollisionsverhinderungssystem gekoppeltem Zustand, Kopplungsinformation über die Objektschnittstelle dem Kollisionsverhinderungssystem zur Verhinderung von Kollisionen innerhalb eines Bewegungsraums der automatisch geführten mobilen Plattform mit gekoppeltem Six-DOF-Messhilfsmittelmodul bereitzustellen.

11. Six-DOF-Messhilfsmittelmodul nach einem der vorhergehenden Ansprüche, aufweisend eine Speisung zur Versorgung des Six-DOF-Messhilfsmittelmoduls mit elektrischem Strom, wobei die Speisung
∘ über die Objektschnittstelle (3) bereitgestellt wird, und
o dazu ausgelegt ist den elektrischen Strom alternativ sowohl über eine Batterie- als auch eine Netz-Stromquelle zu speisen.

12. Six-DOF-Messhilfsmittelmodul nach Anspruch 11, wobei die Speisung eine Stromquelle alternativ sowohl über den angekoppelten Haltegriff (11) als auch über die angekoppelte mobile Plattform und somit über die Objektschnittstelle (3) mit dem Six-DOF-Messhilfsmittelmodul verbindet.

13. Six-DOF-Messhilfsmittelmodul, nach einem der Ansprüche 11 bis 12, wobei die Speisung dazu konfiguriert ist
o die visuellen Markierungen (9, 9', 9", 9‴, 9ʺʺ, 9ʺ‴, 9‴‴), insbesondere die Lichtpunkte, und
o über die Sensoraufsatzkopplungsvorrichtung und somit über die Sensorschnittstelle, angekoppelte Sensoraufsätze,
mit elektrischem Strom zu versorgen.

14. Six-DOF-Messhilfsmittelmodul nach einem der Ansprüche 11 bis 13, mit einer Verbraucherstromregulierungsfunktionalität mit Stromversorgungsanzeige, wobei die Verbraucherstromregulierungsfunktionalität
o eine zur Speisung verbundene Stromquelle identifiziert und mittels der Stromversorgungsanzeige anzeigt, und
o im Falle einer verbundenen Batterie-Stromquelle ferner einen Ladepegel der Batterie-Stromquelle ermittelt und mittels der Stromversorgungsanzeige anzeigt und basierend auf dem Ladepegel den Stromverbrauch des Six-DOF-Messhilfsmittelmoduls reguliert.

15. Six-DOF-Messsystem mit
o einem Six-DOF-Messhilfsmittelmodul nach einem der vorhergehenden Ansprüche, und
o einem Lasertracker mit einer Positions- und Orientierungsbestimmungsfunktionalität zur Bestimmung einer Position und Orientierung des Messhilfsmittelmoduls,
wobei der Lasertracker dazu konfiguriert ist basierend auf
o Kopplungsinformation betreffend
▪ einen angekoppelten und abgekoppelten Zustand eines Sensoraufsatzes, eines Haltegriffs oder einer mobilen Plattform, und
▪ die Identifikation eines gekoppelten Sensoraufsatzes (13, 14), eines gekoppelten Haltegriffs (11) oder einer gekoppelten mobilen Plattform,
∘ Messinformation, und
∘ dem von den visuellen Markierungen (9, 9', 9", 9‴, 9ʺʺ, 9ʺ‴, 9‴‴) gebildeten Muster, 3D-Koordinaten von zu vermessenden Punkten einer Objektoberfläche zu bestimmen.

## Claims

1. Six DOF measurement aid module for use in a system for determining 3D coordinates of points to be measured of an object surface, said system comprising a laser tracker for determining the position and orientation of the six DOF measurement aid module, comprising
∘ a body (1) comprising
▪ an object coupling device (2) with an object interface (3), which object coupling device (2) is configured to couple, via the object interface (3), alternatively both a handle (11) to the body (1) with a fixed pose and the body to a mobile platform with a fixed pose,
▪ a sensor attachment coupling device (18) with a sensor interface, which sensor attachment coupling device is configured to couple alternatively both a sensor attachment (13) effecting non-contact measurement and a sensor attachment (14) effecting tactile measurement to the body (1) with a fixed pose via the sensor interface, and
▪ visual markings (9, 9', 9", 9‴, 9ʺʺ, 9ʺ‴, 9‴‴), which are arranged in a defined spatial relationship in a manner forming a pattern in a marking region (8) on the body and make the orientation of the six DOF measurement aid module determinable for the laser tracker.

2. Six DOF measurement aid module according to Claim 1, wherein the sensor attachment coupling device (18) comprises
∘ a first coupling part (4) with a first coupling part interface (5), which first coupling part (4) is configured to couple at least one sensor attachment effecting non-contact measurement to the body (1) with a fixed pose via the first coupling part interface (5), and
o a second coupling part (6) with a second coupling part interface (7), which second coupling part (6) is configured to couple at least one sensor attachment (14) effecting tactile measurement to the body (1) with a fixed pose via the second coupling part interface (7).

3. Six DOF measurement aid module according to any one of the preceding claims, wherein
∘ the interfaces provide a communicative connection between coupled sensor attachment and six DOF measurement aid module, and respectively between handle or mobile platform and the six DOF measurement aid module,
o the six DOF measurement aid module is configured, for the purpose of determining 3D coordinates of points to be measured of an object surface, to provide to the laser tracker
▪ coupling information relating to
• a coupled and a decoupled state as coupling state, and
• the identification of a coupled sensor attachment (13, 14), of a coupled handle (11) or of a coupled mobile platform, and
▪ measurement information,
and to display the pattern formed by the visual markings (9, 9', 9'', 9''', 9ʺʺ, 9ʺ‴, 9‴‴).

4. Six DOF measurement aid module according to any one of the preceding claims, wherein the six DOF measurement aid module comprises at least one sensor attachment from a group of sensor attachments comprising
o sensor attachments effecting non-contact measurement, in particular a laser scanner sensor attachment, and
∘ sensor attachments effecting tactile measurement.

5. Six DOF measurement aid module according to any one of Claims 3 to 4, wherein the handle (11) comprises an actuatable trigger mechanism (12), which generates a trigger signal as measurement information upon actuation.

6. Six DOF measurement aid module according to Claim 5, wherein the six DOF measurement aid module is configured
∘ in the case of a coupled tactile sensor attachment (14), on the basis of a trigger signal generated by actuation of the trigger mechanism, to provide to the laser tracker coordinate information as measurement information for determining 3D coordinates of points to be measured of an object surface, and
∘ in the case of a coupled sensor attachment effecting non-contact measurement, in particular a laser scanner sensor attachment (13), to continuously provide to the laser tracker coordinate information as measurement information for determining 3D coordinates of points to be measured of an object surface, wherein continuously provided coordinate information is marked on the basis of an actuation of the trigger mechanism.

7. Six DOF measurement aid module according to any one of the preceding claims, wherein the visual markings are light spots (9, 9', 9", 9‴, 9ʺʺ, 9ʺ‴, 9‴‴).

8. Six DOF measurement aid module according to any one of the preceding claims, wherein the body (1) comprises a reflector (10), which is assigned to the visual markings and makes the position of the six DOF measurement aid module determinable for a laser tracker.

9. Six DOF measurement aid module according to any one of Claims 3 to 8, wherein
o the sensor attachment coupling device is furthermore designed to couple a sensor attachment to the body (1) via an adapter piece (17, 17', 17"), which is connectable to the sensor attachment with a fixed pose, in an orientation and position defined relative to the sensor attachment coupling device by the adapter piece, and
o the coupling information furthermore relates to information concerning the defined orientation and position of the sensor attachment relative to the sensor attachment coupling device.

10. Six DOF measurement aid module according to any one of Claims 3 to 9, wherein the six DOF measurement aid module is configured, in a state coupled to an automatically guided mobile platform with a collision prevention system, to provide coupling information via the object interface to the collision prevention system for preventing collisions within a movement space of the automatically guided mobile platform with coupled six DOF measurement aid module.

11. Six DOF measurement aid module according to any one of the preceding claims, comprising a feed for supplying the six DOF measurement aid module with electrical power, wherein the feed
o is provided via the object interface (3), and
o is designed to feed the electrical power alternatively both via a battery power source and via a grid system power source.

12. Six DOF measurement aid module according to Claim 11, wherein the feed connects a power source to the six DOF measurement aid module alternatively both via the coupled handle (11) and via the coupled mobile platform and thus via the object interface (3).

13. Six DOF measurement aid module according to any one of Claims 11 to 12, wherein the feed is configured to supply
o the visual markings (9, 9', 9'', 9''', 9ʺʺ, 9ʺ‴, 9‴‴), in particular the light spots, and
o sensor attachments coupled via the sensor attachment coupling device, and thus via the sensor interface,
with electrical power.

14. Six DOF measurement aid module according to any one of Claims 11 to 13, having a consumer power regulating functionality with power supply display, wherein the consumer power regulating functionality
o identifies a power source connected for the feed and displays it by means of the power supply display, and,
o in the case of a connected battery power source, furthermore ascertains a charge level of the battery power source and displays it by means of the power supply display and regulates the power consumption of the six DOF measurement aid module on the basis of the charge level.

15. Six DOF measuring system comprising
o a six DOF measurement aid module according to any one of the preceding claims, and
∘ a laser tracker having a position and orientation determining functionality for determining a position and orientation of the measurement aid module,
wherein the laser tracker is configured, on the basis of
o coupling information relating to
▪ a coupled and decoupled state of a sensor attachment, of a handle or of a mobile platform, and
▪ the identification of a coupled sensor attachment (13, 14), of a coupled handle (11) or of a coupled mobile platform,
o measurement information, and
o the pattern formed by the visual markings (9, 9', 9", 9‴, 9ʺʺ, 9ʺ‴, 9‴‴),
to determine 3D coordinates of points to be measured of an object surface.

## Revendications

1. Module de moyen auxiliaire de mesure Six-DOF devant être utilisé dans un système comportant une poursuite laser pour la détermination de la position et de l'orientation du module de moyen auxiliaire de mesure Six-DOF, destiné à la détermination des coordonnées tridimensionnelles des points à mesurer d'une surface d'objet, doté
∘ d'un corps (1) avec
▪ un dispositif de couplage d'objet (2) doté d'une interface objet (3), lequel dispositif de couplage d'objet (2) est configuré pour coupler alternativement et en pose rigide aussi bien une poignée (11) au corps (1) que le corps à une plateforme mobile par le biais de l'interface objet (3),
▪ un dispositif de couplage d'embout capteur (18) avec une interface capteur, lequel dispositif de couplage d'embout capteur est configuré pour coupler alternativement et en pose rigide aussi bien un embout capteur mesurant sans contact (13) qu'un embout capteur mesurant de manière tactile (14) au corps (1) par le biais de l'interface capteur, et
▪ des marquages visuels (9', 9" , 9''', 9ʺʺ, 9ʺ‴, 9‴‴), lesquels sont disposés en relation spatiale définie dans une zone de marquage (8) formant un motif sur le corps et rendent déterminable l'orientation du module de moyen auxiliaire de mesure Six-DOF pour la poursuite laser.

2. Module de moyen auxiliaire de mesure Six-DOF selon la revendication 1, dans lequel le dispositif de couplage d'embout capteur (18) comporte
o une première pièce de couplage (4) dotée d'une première interface de pièce de couplage (5), laquelle première pièce de couplage (4) est configurée pour coupler en pose rigide au moins un embout capteur mesurant sans contact au corps (1) par le biais de la première interface de pièce de couplage (5), et
o une deuxième pièce de couplage (6) dotée d'une deuxième interface de pièce de couplage (7), laquelle deuxième pièce de couplage (6) est configurée pour coupler en pose rigide au moins un embout capteur mesurant de manière tactile (14) au corps (1) par le biais de la deuxième interface de pièce de couplage (7).

3. Module de moyen auxiliaire de mesure Six-DOF selon l'une des revendications précédentes, dans lequel
∘ les interfaces fournissent une liaison communicante entre l'embout capteur couplé et le module de moyen auxiliaire de mesure Six-DOF et respectivement entre la poignée ou la plateforme mobile et le module de moyen auxiliaire de mesure Six-DOF,
o le module de moyen auxiliaire de mesure Six-DOF est configuré, afin de déterminer les coordonnées tridimensionnelles des points à mesurer d'une surface d'objet, pour fournir à la poursuite laser
▪ des informations de couplage concernant
• un état accouplé et un état désaccouplé en tant qu'état de couplage, et
• l'identification d'un embout capteur (13, 14) couplé, d'une poignée (11) couplée ou d'une plateforme mobile couplée, et
▪ des informations de mesure,
et pour afficher le motif formé par les marquages visuels (9', 9", 9''', 9ʺʺ, 9ʺ‴, 9‴‴).

4. Module de moyen auxiliaire de mesure Six-DOF selon l'une des revendications précédentes, dans lequel le module de moyen auxiliaire de mesure Six-DOF comporte au moins un embout capteur parmi un groupe d'embouts capteurs avec
o des embouts capteurs mesurant sans contact, en particulier un embout capteur scanner laser, et
o des embouts capteurs mesurant de manière tactile.

5. Module de moyen auxiliaire de mesure Six-DOF selon l'une des revendications 3 à 4, dans lequel la poignée (11) comporte un mécanisme déclencheur (12) actionnable, lequel génère un signal de déclenchement en tant qu'informations de mesure en cas d'actionnement.

6. Module de moyen auxiliaire de mesure Six-DOF selon la revendication 5, dans lequel le module de moyen auxiliaire de mesure Six-DOF est configuré pour
∘ dans le cas où un embout capteur mesurant de manière tactile (14) est accouplé, fournir à la poursuite laser, sur la base d'un signal de déclenchement généré par actionnement du mécanisme déclencheur, des informations de coordonnées en tant qu'informations de mesure afin de déterminer les coordonnées tridimensionnelles des points à mesurer d'une surface d'objet, et
o dans le cas où un embout capteur mesurant sans contact, en particulier un embout capteur scanner laser (13), est accouplé, fournir en continu à la poursuite laser des informations de coordonnées en tant qu'informations de mesure afin de déterminer les coordonnées tridimensionnelles des points à mesurer d'une surface d'objet, dans lequel les informations de coordonnées fournies en continu sont marquées sur la base d'un actionnement du mécanisme déclencheur.

7. Module de moyen auxiliaire de mesure Six-DOF selon l'une des revendications précédentes, dans lequel les marquages visuels sont des points lumineux (9', 9", 9‴, 9ʺʺ, 9ʺ‴, 9‴‴).

8. Module de moyen auxiliaire de mesure Six-DOF selon l'une des revendications précédentes, dans lequel le corps (1) comporte un réflecteur (10), lequel est associé aux marquages visuels et rend déterminable la position du module de moyen auxiliaire de mesure Six-DOF pour une poursuite laser.

9. Module de moyen auxiliaire de mesure Six-DOF selon l'une des revendications 3 à 8, dans lequel
o le dispositif de couplage d'embout capteur est en outre configuré afin de coupler un embout capteur au corps (1) par le biais d'un adaptateur (17, 17', 17''), pouvant être relié à l'embout capteur en pose rigide, dans une position et une orientation définies par l'adaptateur par rapport au dispositif de couplage d'embout capteur, et
o les informations de couplage concernent en outre des informations sur l'orientation et la position de l'embout capteur par rapport au dispositif de couplage d'embout capteur.

10. Module de moyen auxiliaire de mesure Six-DOF selon l'une des revendications 3 à 9, dans lequel le module de moyen auxiliaire de mesure Six-DOF est configuré pour, dans un état couplé à une plateforme mobile guidée automatiquement et dotée d'un système de prévention des collisions, fournir des informations de couplage au système de prévention des collisions par le biais de l'interface objet afin de prévenir des collisions à l'intérieur d'un espace de mouvement de la plateforme mobile guidée automatiquement couplée au module de moyen auxiliaire de mesure Six-DOF.

11. Module de moyen auxiliaire de mesure Six-DOF selon l'une des revendications précédentes, comportant une alimentation destinée à fournir du courant électrique afin d'alimenter le module de moyen auxiliaire de mesure Six-DOF, dans lequel l'alimentation
∘ est fournie par le biais de l'interface objet (3), et
o est configurée de façon à alimenter en courant électrique alternativement aussi bien par le biais d'une batterie que par le biais du secteur.

12. Module de moyen auxiliaire de mesure Six-DOF selon la revendication 11, dans lequel l'alimentation relie une source de courant au module de moyen auxiliaire de mesure Six-DOF alternativement aussi bien par le biais de la poignée accouplée (11) que par le biais de la plateforme mobile accouplée et ainsi par le biais de l'interface objet (3).

13. Module de moyen auxiliaire de mesure Six-DOF selon l'une des revendications 11 à 12, dans lequel l'alimentation est configurée pour alimenter en courant électrique
o les marquages visuels (9', 9'', 9''', 9'''', 9''''', 9''''''), en particulier les points lumineux, et
o les embouts capteurs accouplés, par le biais du dispositif de couplage d'embout capteur et ainsi par le biais de l'interface capteur.

14. Module de moyen auxiliaire de mesure Six-DOF selon l'une des revendications 11 à 13 doté d'une fonction de régulation de l'intensité reçue avec affichage d'alimentation, dans lequel la fonction de régulation de l'intensité reçue
o identifie une source de courant reliée à l'alimentation et l'affiche au moyen de l'affichage d'alimentation, et
∘ dans le cas d'une source de courant par batterie, détermine en outre un niveau de charge de la batterie et l'affiche au moyen de l'affichage d'alimentation et régule la consommation du module de moyen auxiliaire de mesure Six-DOF en fonction du niveau de charge.

15. Système de mesure Six-DOF doté
o d'un module de moyen auxiliaire de mesure Six-DOF selon l'une des revendications précédentes, et
o d'une poursuite laser dotée d'une fonction de détermination de position et d'orientation pour la détermination d'une position et d'une orientation du module de moyen auxiliaire de mesure,
dans lequel la poursuite laser est configurée, en se basant sur
o des informations de couplage concernant
▪ un état accouplé et désaccouplé d'un embout capteur, d'une poignée ou d'une plateforme mobile, et
▪ l'identification d'un embout capteur (13, 14) couplé, d'une poignée (11) couplée ou d'une plateforme mobile couplée,
o des informations de mesure, et
o le motif formé par les marquages visuels (9', 9", 9‴, 9ʺʺ, 9ʺ‴, 9‴‴),
pour déterminer les coordonnées tridimensionnelles des points à mesurer d'une surface d'objet.
